# EUROPEAN PATENT SPECIFICATION

(11) **EP 4 458 315 B1**
(45) Date of publication and mention of the grant of the patent: **23.09.2026**
(21) Application number: 23171423.9
(22) Date of filing: 03.05.2023
(51) Int. Cl.: A61C 7/08, A61C 7/14

(54) **ORTHODONTIC SYSTEMS**
ORTHODONTISCHE SYSTEME
SYSTÈMES ORTHODONTIQUES

(43) Date of publication of application: 06.11.2024
(73) Proprietor: Meley, Hugo, 1201 Genève (CH)
(72) Inventor: Meley, Hugo, 1201 Genève (CH)
(74) Representative: KATZAROV S.A.

(56) References cited:
- WO-A1-2023/011955
- US-A1- 2007 087 302
- US-A1- 2019 298 494
- US-A1- 2021 251 730

## Description

### Technical Field

The present invention relates to orthodontic treatment systems wherein resilient appliances are used to move the patient's teeth to desired orientations in the dental arch.

### Background

Orthodontics is the branch of dentistry that focuses on diagnosing and treating malocclusion. Malocclusion is one of the most common dental problems, when the upper and lower teeth do not align when the mouth is closed, generally due to rotated, overlapping, crowded or crooked teeth.

Common appliances to treat teeth misalignment are braces, or clear aligners. Braces are either visible or hidden, respectively in front or behind the teeth. Adults' choice concerns discrete treatment, i.e., clear aligners or lingual braces. Rather than using brackets and wires to straighten teeth, clear aligners use a series of custom-made repositioning or alignment trays.

Clear aligners have the advantage of reducing chair time. Set of trays are worn for one to two weeks before switching them out for the next set in the series. They can be easily removed for eating, drinking, brushing, and for cleaning in between teeth. In counterpart, they have inherent limitation such as difficulties to induce specific type of tooth movement.

Lingual braces are invisible and rather precise treatment technique. However, they are chair-time demanding for practitioners and the biomechanical action of such appliance is governed by the first neighbour teeth interaction via wire coupling, which prevent the teeth to be moved independently, leading to lower treatment speed and limited treatment capacity.

WO2023011955A1 discloses a removable dental appliance consisting of a dental aligner made from a flexible strip designed to cover only the lingual surface of the teeth, utilizing connectors fixed to that same inner surface which elastically fit into corresponding pockets on the strip to apply therapeutic restraint and shift teeth into a desired position while leaving the other dental surfaces entirely free and unobstructed for improved comfort and aesthetics.

### Summary

The invention is as defined in the appended claims.

The present invention is directed to orthodontic treatment system that comprises a series of orthodontic appliances for use in sequence, that are less invasive for the patient, that can be remove by hand, and without any residual mechanical stress to the adjacent tooth.

The orthodontic appliances are designed to improve biomechanical action efficiency by decoupling teeth movement resulting in an invisible appliance with increased treatment capacity and low chair time for the patient.

The orthodontic appliance according to the invention comprises a base suitable to be fixed to the lingual side of a tooth, and an orthodontic arch comprising an anatomical arch base section and a connector, the connector is intended to anchor the base, wherein the connector is projecting upward from the arch base section.

The arch base section comprises a buccal face intended to be in contact with or in front of the gum, a lingual face intended to be next to the tongue, wherein the connector is projecting upward from the distal end of the buccal face.

The connector comprises a pocket comprising a cavity suitable to anchor the base, the connector is intended to be directly anchored to the base by a snap joint assembly in a perpendicular or sensibly perpendicular direction to the occlusal plane.

According to a prefer embodiment, the connector is integral to the arch base section.

The connector is elastically deformable compared to the arch base section, said connector is configured to generate forces from being transmitted to the teeth to achieve displacement between a first spatial configuration towards a second spatial configuration.

According to one characteristic, the connectors are independent of each other.

According to a characteristic, the connector is linked to the arch base section by a peripheral wall at the periphery of the cavity opening.

According to the previous characteristic, the connector is linked to the arch base section by lateral ribs.

More precisely, the snap joint assembly is an annular type, semi-annular, rounded edge dovetail or ball and socket joint.

The snap-fitted capacity of the connector is due to a difference in thickness of the constituent material of the cavity.

According to one embodiment, the base comprises an isometrical or almost isometrical section in distal plane, along a distal curve profile included in the meridian plane of the tooth, the distal curve profile of the base follows the exterior profile of the tooth.

According to another embodiment, the base is convex in the longitudinal direction, i.e., in the meridian plane.

The orthodontic treatment system according to the invention, is designed to carry out a movement of at least one tooth to be treated from an initial spatial configuration toward a desired final spatial configuration, wherein the orthodontic treatment system comprises a series of orthodontic appliances according to the invention, so as to accomplish the movement by successive incrementation steps, each orthodontic appliance of the series carrying out one step.

The process to manufacture the orthodontic treatment system according to the invention, comprises the following steps: numerical treatment planning of the dental arch, CAD processing, 3D printing of the series of orthodontic arch, post-processing.

### Brief description of the drawings

Further particular advantages and features of the invention will become more apparent from the following non-limitative description of at least one embodiment of the invention which will refer to the accompanying drawings, wherein
Figure 1 is a rear perspective schematic view of a orthodontic appliance placed over a dental arch illustrating a orthodontic arch according to the present invention.
Figure 2 is a front elevation view of the orthodontic arch illustrated in figure 1.
Figure 3 is a rear elevation view of the orthodontic arch illustrated in figure 1.
Figure 4 is a side cross-sectional view of the orthodontic arch depicted in figure 2.
Figure 5 is a rear perspective view of bases affixed to teeth of a dental arch according to a first embodiment.
Figure 6 is an enlarged perspective view of a base affixed to a tooth illustrated in figure 5.
Figure 7 is a side cross-sectional view of a base affixed to a tooth depicted in figure 6.
Figure 8 is an enlarged cross-sectional schematic view in the distal plane of a base affixed to a connector according to the present invention.

### Detailed description

"The occlusal plane" is an imaginary surface that extends from the incisal edges of the front teeth and passes through the tips of the cusps of the posterior teeth.

"The vertical axis", or "insertion axis" is normal to the occlusal plan.

"The mesio-distal" axis is defined for each tooth as the tangent to the dental arcade curve.

"Mesio-distal plane" is defined for each tooth by the vertical axis and the mesio-distal axis.

"Meridian plane" is defined as the midtransverse plane orthogonal to the mesio-distal plane.

"Lingual direction" means toward the tongue.

"Gingival direction" means toward the gum or gingiva.

"Buccal direction" means toward the chick/lips.

The orthodontic treatment system according to the invention is intended to displace at least one tooth between a first spatial configuration towards a desired spatial configuration, to treat malocclusion.

The orthodontic treatment system comprises a series of orthodontic appliances, to accomplish the desire movement by successive incrementation steps.

More precisely, each orthodontic appliance of the series is carrying out one step, to displace at least one tooth from an intermediate position to another, i.e., the first orthodontic appliance of the series is intended to displace at least one tooth between a first spatial configuration towards a second spatial configuration.

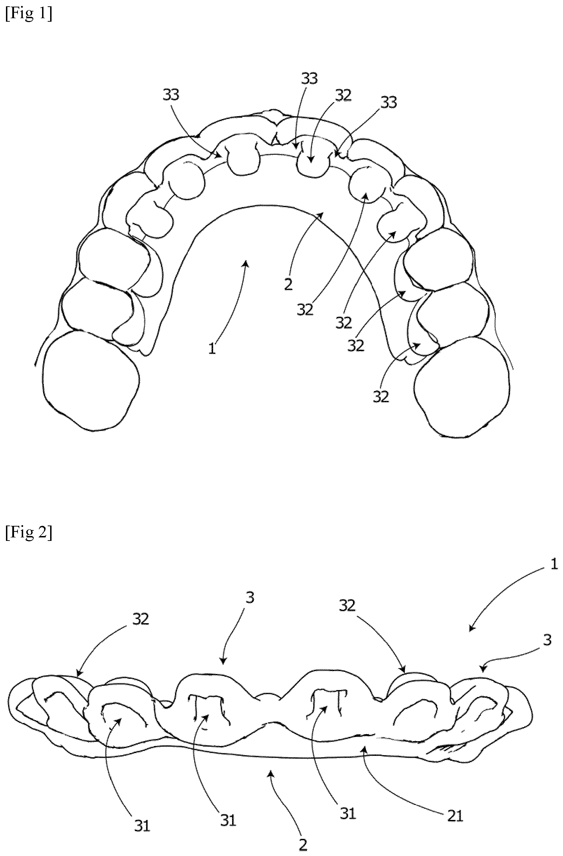

With reference to figure 1, an orthodontic appliance according to the invention is positioned next to, more precisely in close contact to the lingual side of a dental arch.

The orthodontic appliance comprises an orthodontic arch (1) conforms at least in part to the shape of the lingual side of a dental arch and at least one base (4) intended to be fixed to the lingual side of a tooth.

The orthodontic arch (1) comprises an anatomical arch base section (2) and at least one connector (3) intended to be anchored to a base (4).

The arch base section (2) is curved to be conform to the shape of the lingual side of a dental arch, and comprises a buccal face (21) in contact with or in front of the marginal gum, a lingual face (22) intended to be next to the tongue, and a gingival face sensibly in opposition of the lingual face (22).

The buccal face (21) is intended to be located in front of the marginal gum, i.e., in front of the top of the gum, below the base of teeth. The lingual face (22) is intended to be positioned in front, or sensibly in front of the occlusal plan. More precisely, the lingual face (22) is suitable to be placed in opposition of the palate or of the gum below the tongue.

The lingual face (22) is considered as an upper face, when the orthodontic arch (1) is positioned on the lower mandible, or is considered as an inferior face, when the orthodontic arch (1) is positioned on the upper mandible.

As the anatomical arch base section (2) is preferably a rounded edge anatomical wall, the lingual face (22) is adjacent to and in the prolongation of the buccal face (21), the connectors (3) mark the differentiation line between the two latter faces.

The arch base section (2) maintains the correct dental arch shape during the treatment and acts as a force referential.

The arch base section (2) is rigid, i.e., non-deformable, whereas the connector (3) is resilient, i.e., elastically deformable compared to the arch base section (2).

The arch base section (2) is considered non-deformable compared to the elastically deformable connector (3), as the arch base section (2) is considered thick, and the connector (3) is considered thin.

It is understood that the connector (3) is not resilient per se, as the connector (3) is intended to displace one tooth, but only resilient compared to the rigid arche base section (2), to be able to connect to the base (4) by a snap-fit assembly, as explained in more detail further in the description.

The elastically deformable properties of the connector (3) arise from the thickness differences from its parts.

The rigidity of the arch base section (2) is adapted so that, once engaged in the lingual side of the teeth, it maintains its shape in reaction to the forces exerted on the teeth to be treated while the elastically deformable connectors (3) allow the forces to be transmitted to the tooth.

The width of the arch base section (2) ranges from 3 to 10 millimeters.

The thickness of the arch base section (2) ranges from 0.8 to 2 millimeters.

The respective thicknesses (e, E) of the connector (3) and of the arch base section (2), along the normal to the surface of the appliance, are such that the ratio E/e is > 2, preferably E/e > 3, more preferably E/e > 4.

The orthodontic arch (1) and the base (4) are made of biocompatible synthetic material.

The material of the orthodontic appliance requires specific compressive, tensile, and flexural strength characteristics. Commercially available biocompatible photopolymerizable polymers resins for 3D printing filled those requirements, such as polyamide or polylactide resins.

According to one characteristic, the connector (3) is projecting upward from the arch base section (2).

More precisely, the connector (3) is located on top of the lingual face (22) of the arch base section (2), more precisely located at the distal end of the lingual face (22).

It is understood that the distal end of the lingual face (22) is the end of the lingual face (22) in the buccal direction, next to the gum, at the base of the teeth.

The connector (3) is projecting upward from the lingual face (22) of the arch base section (2), more precisely is projecting upward from the distal end of the lingual face (22), i.e., in the extension of the buccal face (21).

The latter characteristic reduces the prominence of lingual asperities and allows to reduce hindrance of the appliance and minimize device invasiveness for patient.

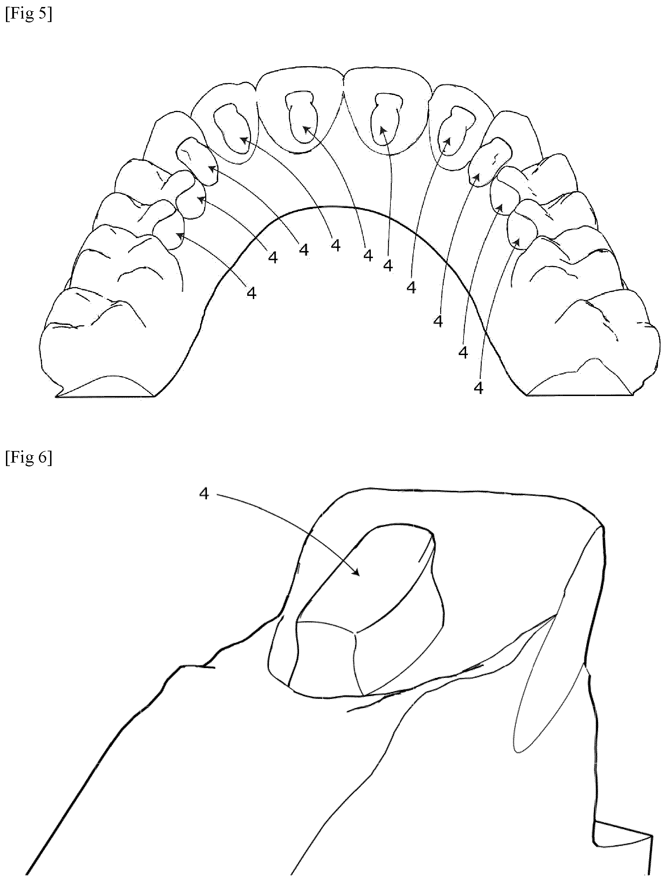

As the arch base section (2) is anatomical to the gum, and as illustrated in figure 5, the arch base section (2) is convex in the mid-sagittal plane.

Thus, the connectors (3) intended to be affixed to the front teeth, i.e, incisors and canines, are oriented forward toward the buccal direction, whereas the connectors (3) of the premolars or molars are oriented sensibly in a perpendicular direction toward the occlusal plan.

In the prefer embodiment, the connector (3) is integral to the arch base section (2), i.e., molded, welded, or printed in one piece to the arch base section (2).

The connector (3) is directly intended to connect to the base (4) without any intermediate connection.

The connector (3) thus comprises a pocket (32) surrounding a cavity (31) form-fitting to the base (4).

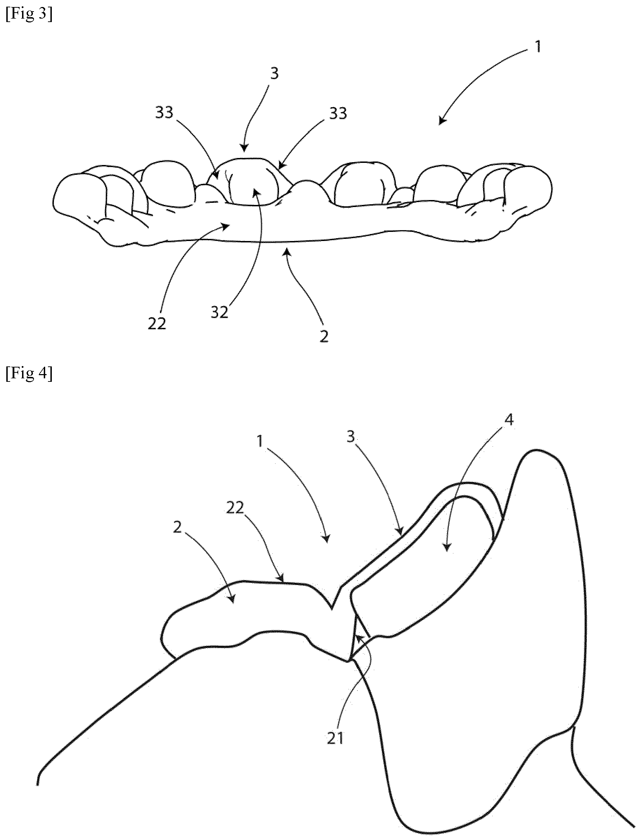

With reference to figure 4, the buccal face (21) of the arch base section (2) extends upward to a peripheral wall to the pocket (32) opening, i.e., peripheral to the cavity (31) entrance.

This peripheral wall which extends upward from the buccal face (21) of the arch base section (2) comprises two lateral ribs (33) peripheral to the entrance of the cavity (31).

The peripheral wall extends backward as an envelope of the cavity (31) forming the pocket (32).

As the connector (3) is integral to the arch base section (2), the pocket (32) peripheral wall is an extension of the lateral ribs (33).

In other words, the connector (3) thus comprises a pocket (32) held by lateral ribs (33) to the arch base section (2).

The thickness of the pocket (32) wall ranges from 0.3 to 0.6 millimeters.

The thickness of the lateral ribs (33) walls ranges from 0.3 to 0.6 millimeters.

In the illustrated embodiment, connectors (3) are connected to the arch base section (2) independently to each other.

According to the latter characteristic, each connector (3) is held independently to the arch base section (2) by lateral ribs (33).

Dependent of the structure of the orthodontic arch (1), lateral ribs (33) may merge with each other's.

The connectors (3) are thus designed to exert controlled and adjustable force to the tooth, exerting force independently to each tooth, without any residual mechanical stress to the adjacent tooth.

As previously introduced, the connector (3) is anchored to the base (4) by a snap joint assembly.

An orthodontic appliance can be easily changed by another of the series by the patient himself, without any intervention of a medical practitioner.

The orthodontic appliance according to the invention can indeed be removable by hand.

In the illustrated embodiment, the connector (3) is secured to the base (4) by a vertical snap joint assembly, in other words assembled in a perpendicular or sensibly perpendicular direction to the occlusal plane, as further described in the specification.

The snap joint assembly is a form-fitting connection, as annular type, semi-annular, ball and socket joint type or rounded edge dovetail.

It is understood that a semi-annular snap joint assembly, is a partially annular type of snap joint assembly.

In the illustrated embodiment, the snap joint assembly is rounded edge dovetail.

It is understood that the connection is tenon-mortise joint.

The base (4) thus comprises as a tenon, a lower face intended to be glued to the lingual surface of a tooth, an upper face and two lateral faces.

The lower face profile of the base (4) follows the lingual surface profile of a tooth which is intended to be fixed.

With reference to figure 6, the upper face of the base (4) has a curve profile which follows the one of the lingual surface of the tooth.

In the preferred illustrate embodiment, the section of the base (4) according to the mesio-disal plane of a tooth is dovetail, the base (4) thus comprises two distal shoulders (41) and proximal recess (42).

According to the illustrated embodiment, the sections of the base (4) according to the mesio-distal plane of the base (4) is isometrical or almost isometrical along a curve profile belonging to the meridian plane, as illustrated in figure 6.

In other words, the three-dimensional shape of the base (4) is derived from the extrusion of a dovetail section along a curve profile belonging to the meridian plane, where the average slope of the curve profile follows that of the intersection between the tooth surface and the meridian plan. This three-dimensional shape with almost constant dove-tailed cross section aim maximizes the retaining function of the attachment while minimizing device invasiveness for patient.

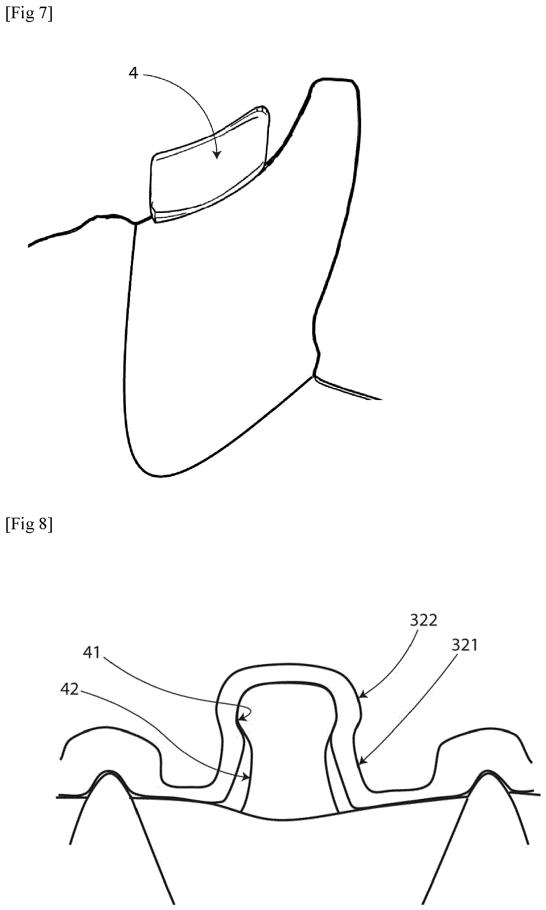

According to another embodiment, illustrated in figure 7, the section according to the meridian plane is convex, while the section according to the mesio-distal plane of the base (4) is dovetail.

With reference to figure 5, each or most of the teeth of the dental arc is connected to a base (4), to ensure that the orthodontic arch (1) is held in position.

With reference to figure 8, the pocket (32) comprises an arch (321) at its base extended by a rounded shape protuberance (322).

The rounded shape protuberance of the pocket (32) is intended to fit the distal shoulder (41) of the base (4), while the proximal recess (42) is surrounded by a housing inside the arch constituent of the base of the pocket (32).

The relative orientation between the base (2) with respect to the insertion axis is expected to evolve along the treatment with the teeth rotating, so that the connector (3) shapes is also expected to evolve from one arch of the series to another. Each arch of the treatment is CAD processed to adapt consequently the peripheral wall (311) relative position to the base (2).

The manufacturing process of the orthodontic treatment system comprises the following steps: numerical treatment planning of the dental arch, CAD processing, 3D printing of the series of orthodontic arch (1), post-processing, and packaging.

The numerical treatment planning of the dental arch is conducted with standard licensed software for treatment planning. The computer-aided design (CAD) processing is performed with proprietary software developed for the application. The 3D printing is accomplished with 3D printer meeting the precision, speed and regulatory requirements.

The post-processing typically comprises a cleanup with solvent, a robotized or manual removal of supports, and optionally a robotized or manual surface finish.

## Claims

1. An orthodontic appliance comprising a base (4) suitable to be fixed to the lingual side of a tooth, and an orthodontic arch (1) comprising an anatomical arch base section (2) and a connector (3), the connector (3) is intended to anchor the base (4), **characterized in that** the connector (3) is projecting upward from the arch base section (2), and that the arch base section (2) is rigid and maintains the correct dental arch shape during the treatment and acts as a force referential, while the connector (3) is resilient compared to the arch base section (2), and wherein the connector (3) comprises a pocket (32) comprising a cavity (31) suitable to anchor the base (4), the connector (3) is assembled to the base (4) by a snap joint assembly in a perpendicular or sensibly perpendicular direction to the occlusal plane.

2. The orthodontic appliance of claim 1, **characterized in that** the arch base section (2) comprises a buccal face (21) intended to be in contact with or in front of the gum, a lingual face (22) intended to be next to the tongue, wherein the connector (3) is projecting upward from the distal end of the buccal face (21), where the distal end of the lingual face (22) is the end of the lingual face (22) in the buccal direction, next to the gum, at the base of the teeth.

3. The orthodontic appliance of claim 1 or 2, wherein the snap joint assembly is an annular type, semi-annular, rounded edge dovetail or ball and socket joint.

4. The orthodontic appliance of any one of claims 1 to 3, wherein the snap-fitted capacity of the connector (3) is due to a difference in thickness of the constituent material of the cavity (31).

5. The orthodontic appliance of any one of the preceding claims, wherein the connector (3) is integral to the arch base section (2).

6. The orthodontic appliance of any one of the preceding claims, wherein the connector (3) is elastically deformable compared to the arch base section (2), said connector (3) is configured to generate forces from being transmitted to the teeth to achieve displacement between a first spatial configuration towards a second spatial configuration.

7. The orthodontic appliance of any one of the preceding claims, wherein it comprises connectors (3) independent of each other.

8. The orthodontic appliance of any one of the ones of claims 1 to 7, wherein the connector (3) is linked to the arch base section (2) by a peripheral wall at the periphery of the cavity (31) opening.

9. The orthodontic appliance of claim 8, wherein the connector (3) is linked to the arch base section (2) by lateral ribs (33).

10. The orthodontic appliance of any one of claims 1 to 9, wherein the base is convex in the longitudinal direction, in the meridian plane.

11. An orthodontic treatment system, designed to carry out a movement of at least one tooth to be treated from an initial spatial configuration toward a desired final spatial configuration, wherein the orthodontic treatment system comprises a series of orthodontic appliances according to any one of preceding claims, so as to accomplish the movement by successive incrementation steps, each orthodontic appliance of the series carrying out one step.

12. Process to manufacture the orthodontic treatment system according to the preceding claim, comprising the following steps:
a. Numerical treatment planning of the dental arch,
b. CAD processing,
c. 3D printing of the series of orthodontic arch (1),
d. Post-processing.

## Patentansprüche

1. Kieferorthopädische Apparatur, umfassend eine Basis (4), die dazu geeignet ist, an der lingualen Seite eines Zahns fixiert zu werden, und einen kieferorthopädischen Bogen (1), der einen anatomischen Bogenbasisabschnitt (2) und einen Verbinder (3) umfasst, wobei der Verbinder (3) dazu bestimmt ist, die Basis (4) zu verankern, **dadurch gekennzeichnet, dass** der Verbinder (3) von dem Bogenbasisabschnitt (2) nach oben ragt und dass der Bogenbasisabschnitt (2) starr ist und während der Behandlung die korrekte Zahnbogenform aufrechterhält und als ein Kraftbezugspunkt fungiert, während der Verbinder (3) gegenüber dem Bogenbasisabschnitt (2) elastisch ist, und
wobei der Verbinder (3) eine Tasche (32) umfasst, die einen Hohlraum (31) umfasst, der dazu geeignet ist, die Basis (4) zu verankern, wobei der Verbinder (3) durch eine Schnappverbindungsbaugruppe in einer senkrechten oder merklich senkrechten Richtung zur Aufbissebene an der Basis (4) montiert ist.

2. Kieferorthopädische Apparatur nach Anspruch 1, **dadurch gekennzeichnet, dass** der Bogenbasisabschnitt (2) eine bukkale Fläche (21), die dazu bestimmt ist, in Kontakt mit oder vor dem Zahnfleisch zu sein, und eine linguale Fläche (22) umfasst, die dazu bestimmt ist, neben der Zunge zu liegen, wobei der Verbinder (3) von dem distalen Ende der bukkalen Fläche (21) nach oben ragt, wobei das distale Ende der lingualen Fläche (22) das Ende der lingualen Fläche (22) in der bukkalen Richtung neben dem Zahnfleisch an der Basis der Zähne ist.

3. Kieferorthopädische Apparatur nach Anspruch 1 oder 2, wobei die Schnappverbindungsbaugruppe eine ringförmige, halbringförmige Schwalbenschwanz- oder Kugelgelenkverbindung mit abgerundeter Kante ist.

4. Kieferorthopädische Apparatur nach einem der Ansprüche 1 bis 3, wobei die Schnappverbindungskapazität des Verbinders (3) auf einem Unterschied der Dicke des konstituierenden Materials des Hohlraums (31) beruht.

5. Kieferorthopädische Apparatur nach einem der vorhergehenden Ansprüche, wobei der Verbinder (3) aus einem Stück mit dem Bogenbasisabschnitt (2) ist.

6. Kieferorthopädische Apparatur nach einem der vorhergehenden Ansprüche, wobei der Verbinder (3) gegenüber dem Bogenbasisabschnitt (2) elastisch verformbar ist, wobei der Verbinder (3) dazu ausgebildet ist, Kräfte zu erzeugen, die auf die Zähne übertragen werden, um eine Verschiebung von einer ersten räumlichen Konfiguration zu einer zweiten räumlichen Konfiguration zu erreichen.

7. Kieferorthopädische Apparatur nach einem der vorhergehenden Ansprüche, wobei sie Verbinder (3) umfasst, die unabhängig voneinander sind.

8. Kieferorthopädische Apparatur nach einem der Ansprüche 1 bis 7, wobei der Verbinder (3) mit dem Bogenbasisabschnitt (2) durch eine Umfangswand am Umfang der Öffnung des Hohlraums (31) verbunden ist.

9. Kieferorthopädische Apparatur nach Anspruch 8, wobei der Verbinder (3) mit dem Bogenbasisabschnitt (2) durch seitliche Rippen (33) verbunden ist.

10. Kieferorthopädische Apparatur nach einem der Ansprüche 1 bis 9, wobei die Basis in der Längsrichtung in der Meridianebene konvex ist.

11. Kieferorthopädisches Behandlungssystem, das dazu ausgelegt ist, eine Bewegung mindestens eines zu behandelnden Zahns von einer anfänglichen räumlichen Konfiguration zu einer gewünschten endgültigen räumlichen Konfiguration auszuführen, wobei das kieferorthopädische Behandlungssystem eine Reihe von kieferorthopädischen Apparaturen nach einem der vorhergehenden Ansprüche umfasst, um die Bewegung durch aufeinanderfolgende Inkrementierungsschritte zu erreichen, wobei jede kieferorthopädische Apparatur der Reihe einen Schritt ausführt.

12. Prozess zur Herstellung des kieferorthopädischen Behandlungssystems nach dem vorhergehenden Anspruch, umfassend die folgenden Schritte:
a. numerische Behandlungsplanung des Zahnbogens,
b. CAD-Bearbeitung,
c. 3D-Druck der Reihe von kieferorthopädischen Bögen (1),
d. Nachbearbeitung.

## Revendications

1. Appareil orthodontique comprenant une base (4) appropriée pour être fixée sur la face linguale d'une dent, et un arc orthodontique (1) comprenant une section de base d'arc anatomique (2) et un connecteur (3), le connecteur (3) étant destiné à ancrer la base (4), **caractérisé en ce que** le connecteur (3) fait saillie vers le haut depuis la section de base d'arc (2), et **en ce que** la section de base d'arc (2) est rigide et maintient la forme correcte de l'arcade dentaire pendant le traitement et agit comme un référentiel de force, tandis que le connecteur (3) est élastique par rapport à la section de base d'arc (2), et dans lequel le connecteur (3) comprend une poche (32) comprenant une cavité (31) appropriée pour ancrer la base (4), le connecteur (3) étant assemblé à la base (4) par un assemblage à encliquetage dans une direction perpendiculaire ou sensiblement perpendiculaire au plan occlusal.

2. Appareil orthodontique selon la revendication 1, **caractérisé en ce que** la section de base d'arc (2) comprend une face buccale (21) destinée à être en contact avec ou en face de la gencive, une face linguale (22) destinée à être à côté de la langue, dans lequel le connecteur (3) fait saillie vers le haut depuis l'extrémité distale de la face buccale (21), où l'extrémité distale de la face linguale (22) est l'extrémité de la face linguale (22) dans la direction buccale, à côté de la gencive, à la base des dents.

3. Appareil orthodontique selon la revendication 1 ou 2, dans lequel l'assemblage à encliquetage est de type annulaire, semi-annulaire, à queue d'aronde à bord arrondi ou à rotule.

4. Appareil orthodontique selon l'une quelconque des revendications 1 à 3, dans lequel la capacité d'encliquetage du connecteur (3) est due à une différence d'épaisseur du matériau constitutif de la cavité (31).

5. Appareil orthodontique selon l'une quelconque des revendications précédentes, dans lequel le connecteur (3) est intégré à la section de base d'arc (2).

6. Appareil orthodontique selon l'une quelconque des revendications précédentes, dans lequel le connecteur (3) est déformable élastiquement par rapport à la section de base d'arc (2), ledit connecteur (3) étant configuré pour générer des forces à transmettre aux dents pour obtenir un déplacement entre une première configuration spatiale vers une deuxième configuration spatiale.

7. Appareil orthodontique selon l'une quelconque des revendications précédentes, dans lequel il comprend des connecteurs (3) indépendants les uns des autres.

8. Appareil orthodontique selon l'une quelconque des revendications 1 à 7, dans lequel le connecteur (3) est relié à la section de base d'arc (2) par une paroi périphérique au niveau de la périphérie de l'ouverture de la cavité (31).

9. Appareil orthodontique selon la revendication 8, dans lequel le connecteur (3) est relié à la section de base d'arc (2) par des nervures latérales (33).

10. Appareil orthodontique selon l'une quelconque des revendications 1 à 9, dans lequel la base est convexe dans la direction longitudinale, dans le plan méridien.

11. Système de traitement orthodontique, conçu pour effectuer un mouvement d'au moins une dent à traiter depuis une configuration spatiale initiale vers une configuration spatiale finale souhaitée, dans lequel le système de traitement orthodontique comprend une série d'appareils orthodontiques selon l'une quelconque des revendications précédentes, de manière à accomplir le mouvement par étapes d'incrémentation successives, chaque appareil orthodontique de la série effectuant une étape.

12. Procédé de fabrication du système de traitement orthodontique selon la revendication précédente, comprenant les étapes suivantes :
a. Planification numérique du traitement de l'arcade dentaire,
b. Traitement CAO,
c. Impression 3D de la série d'arcs orthodontiques (1),
d. Post-traitement.
